# EUROPÄISCHE PATENTSCHRIFT

(11) **EP 0 659 990 B1**
(45) Veröffentlichungstag und Bekanntmachung des Hinweises auf die Patenterteilung: **26.05.1999**
(21) Anmeldenummer: 94118536.5
(22) Anmeldetag: 25.11.1994
(51) Int. Cl.: F02B 29/04, F01P 7/04

(54) **Verfahren und Vorrichtung zur Steuerung einer Brennkraftmaschine**
Method and device for controlling an internal combustion engine
Procédé et dispositif de contrôle d'un moteur à combustion interne

(30) Priorität: 23.12.1993 DE 4344138
(43) Veröffentlichungstag der Anmeldung: 28.06.1995
(73) Patentinhaber: ROBERT BOSCH GMBH, 70442 Stuttgart (DE)
(72) Erfinder: Altmann, Uwe, Dipl.- Ing., D-71701 Schwieberdingen (DE); Grieshaber, Hermann, Dipl.-Ing., D-72631 Aichtal (DE)

(56) Entgegenhaltungen:
- EP-A- 0 496 085
- DE-A- 2 231 254
- DE-A- 3 838 404
- US-A- 5 201 285

## Beschreibung

### Stand der Technik

Die Erfindung betrifft ein Verfahren und eine Vorrichtung zur Steuerung einer Brennkraftmaschine. Solche Verfahren und Vorrichtungen zur Steuerung einer Brennkraftmaschine, insbesondere einer Dieselbrannkraftmaschine, die einen Lüfter zur Kühlung der Ladeluft umfaßt, werden insbesondere bei Nutzkraftfahrzeugen wie beispielsweise Bussen, eingesetzt.

Aus der DE-OS 38 38 404 ist eine Steuereinrichtung für den Antrieb eines Lüfters einer Brennkraftmaschine, der zur Kühlung der Ladeluft eingesetzt wird, bekannt.

Die DE-A-38 38 404 beschreibt eine Steuereinrichtung für den Antrieb des Lüfters einer Brennkraftmaschine, wobei die Brennkraftmaschine auch mit einer Ladeluftkühlung ausgestattet ist. Diese Einrichtung ist derart ausgebildet, daß wenn die Ladelufttemperatur ansteigt, durch die Ansteuerung eines Stellers die Drehzahl des Lüftermotors erhöht wird.

In der US-A-5,201,285 ist ebenfalls ein Verfahren zur Steuerung eines Lüfters beschrieben. Ein Prozessor steuert den Lüfter so an, daß sich eine optimale Drehzahl des Lüfters in Abhängigkeit der Umgebungstemperatur einstellt.

Die DE-A 22 31 254 beschreibt eine Steuerung für ein Kühlluftgebläse. Das Kühlluftgebläse wird in Abhängigkeit von der Motortemperatur geregelt.

Aus der EP-A-0 496 085 ist eine Regeleinrichtung für den Antrieb eines Lüfters einer Brennkraftmaschine, der zur Kühlung der Ladeluft eingesetzt wird, bekannt. Die Drehzahl des Lüfters wird mit einer kennfeldgesteuerten Elektronik geregelt, wobei die Ausgangssignale verschiedener Sensoren genutzt werden. Diese Einrichtung umfaßt eine Klappe mit der die Ladeluft wahlweise unmittelbar zum Saugrohr gelangt bzw. zusätzlich durch einen Wärmetauscher strömen muß. Diese Klappe wird abhängig vom Lastzustand der Brennkraftmaschine gesteuert, um die Temperatur der Ladeluft zu steuern.

### Aufgabe der Erfindung

Der Erfindung liegt die Aufgabe zugrunde, bei einem Verfahren und einer Vorrichtung zur Steuerung der Brennkraftmaschine den Verbrauch und die Abgasemissionen zu senken. Diese Aufgabe wird durch die in den unabhängigen Ansprüchen gekennzeichneten Merkmale gelöst.

### Vorteile der Erfindung

Durch das erfindungsgemäße Verfahren und die erfindungsgemäße Vorrichtung können der Kraftstoffverbrauch und die Abgasemissionen bei gleicher Fahrleistung gesenkt werden.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsform erläutert. Es zeigen Figur 1 ein Blockdiagramm der erfindungsgemäßen Vorrichtung, Figur 2 ein Flußdiagramm zur Verdeutlichung der erfindungsgemäßen Vorgehensweise und Figur 3 den Zusammenhang zwischen der Ladelufttemperatur und dem Kraftstoffverbrauch bzw. der zulässigen Spritzbeginnverstellung.

### Beschreibung der Ausführungsbeispiele

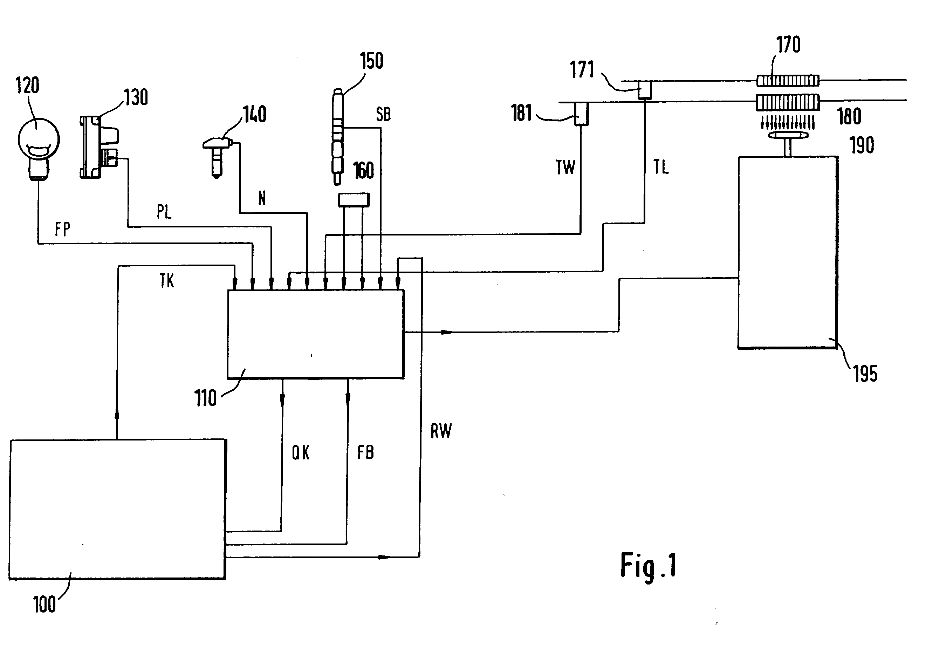

In Figur 1 ist die erfindungsgemäße Vorrichtung als Blockdiagramm dargestellt. Eine Kraftstoffzumeßeinrichtung ist mit 100 bezeichnet. Diese Kraftstoffzumeßeinrichtung wird üblicherweise auch als Kraftstoffpumpe bezeichnet. Als Kraftstoffpumpen können Verteilerpumpen, Reihenpumpen, magnetventilgesteuerte Pumpen oder andere Pumpentypen eingesetzt werden.

Diese Kraftstoffzumeßeinrichtung 100 steht über verschiedene Leitungen mit einer Steuereinheit 110, die auch als Motorsteuergerät bezeichnet werden kann, in Verbindung. So beaufschlagt die Steuereinheit 110 beispielsweise einen Steller zur Beeinflussung der Kraftstoffmenge mit einem Mengensignal QK sowie einen Steller zur Beeinflussung des Förderbeginns mit einem Förderbeginnsignal FB.

Desweiteren gelangt ein Signal RW bezüglich der eingespritzten Kraftstoffmenge und der Temperatur des Kraftstoffs TK von der Kraftstoffzumeßeinrichtung zu der Steuereinheit 110.

Die Steuereinheit 110 verarbeitet Signale verschiedener Sensoren. Dies sind unter anderem das Ausgangssignal FP eines Sensors 120, der die Fahrpedalstellung anzeigt, das Ausgangssignal PL eines Ladedrucksensors 130, das Ausgangssignal N eines Drehzahlsensors 140, das Ausgangssignal SB eines Spritzbeginnsensors 150 sowie Signale weiterer Sensoren 160.

Ein Kühler 170 wird von der Ladeluft durchströmt. Die Temperatur TL der Ladeluft wird von einem Ladelufttemperatursensor 171 erfaßt und zur Steuereinheit 110 übermittelt. Ein weiterer Kühler 180 wird von der Kühlflüssigkeit durchströmt. Die Temperatur TW der Kühlflüssigkeit wird von einem Sensor 181 erfaßt und ein entsprechendes Signal der Steuereinheit 110 zugeleitet.

Die beiden Kühler 170 und 180, die auch eine bauliche Einheit bilden können, werden von einem Lüfter 190 mit Luft gekühlt. Der Lüfter 190 wird von einer Antriebseinheit 195 angetrieben. Diese Antriebseinheit wird von der Steuereinheit 110 mit einem Signal beaufschlagt.

Bei einer Ausgestaltung der Erfindung kann auch vorgesehen sein, daß eine separate Steuereinheit vorgesehen ist, die ausgehend von einem Signal der Steuereinheit 110 die Antriebseinheit 195 steuert. Eine solche separate Steuereinheit kann als Lüftersteuergerät bezeichnet werden. Diese setzt beispielsweise die von dem Motorsteuergerät 110 übermittelten Signale in Ansteuerwerte für den Lüfterantrieb 195 um.

Diese Einrichtung arbeitet nun wie folgt. Ausgehend von den Ausgangssignalen der verschiedenen Sensoren berechnet die Steuereinheit Ansteuersignale zur Beaufschlagung von verschiedenen Stellern der Kraftstoffzumeßeinrichtung. Insbesondere berechnet die Steuereinheit 110 eine zuzumessende Kraftstoffmenge und einen Förderbeginn bzw. einen Spritzbeginn. Abhängig vom verwendeten Pumpentyp werden als Steller unterschiedliche Komponenten eingesetzt.

Desweiteren beaufschlagt die Steuereinheit 110 die Antriebseinheit des Lüfters 190 mit einem Steuersignal. Hierzu werden ebenfalls die Ausgangssignale der verschiedenen Sensoren 120 bis 160 berücksichtigt.

Die Antriebseinrichtung 195 des Lüfters 190 wird betriebskenngrößenabhängig gesteuert bzw. geregelt. Insbesondere erfolgt diese betriebskenngrößenabhängige Steuerung abhängig von einem Lastsignal. Als Lastsignal L kann z.B. das Ausgangssignal FP des Fahrpedalstellungssensors 120, das von der Kraftstoffzumeßeinrichtung rückgemeldete Signal RW bezüglich der eingespritzten Kraftstoffmenge, ein in der Steuereinheit 110 intern vorliegendes Signal bezüglich der einzuspritzenden Kraftstoffmenge, das Ansteuersignal QK für den Kraftstoffmengensteller oder eine andere entsprechende Größe verwendet werden.

Abhängig von einem dieser Lastsignale wird die Antriebseinheit 195 angesteuert. Diese Ansteuerung erfolgt vorzugsweise so, daß bei niederen Lasten sich eine hohe Ladelufttemperatur und bei hohen Lasten eine niedere Ladelufttemperatur einstellt.

Die Antriebseinheit besteht bei einer bevorzugten Ausführungsform aus einer Konstantpumpe, die einen Volumenstrom zu einem Konstantmotor fördert. Ein vorgesteuertes Proportionaldruckventil, das im Bypass zum Konstantmotor geschaltet ist, steuert den Druck bzw. die Drehzahl des Konstantmotors bzw. des Laufrades. Eine entsprechende Einrichtung ist in der DE-OS 38 38 404 dargestellt.

Entsprechend dem Lastzustand des Verbrennungsmotors wird der Strom des Proportionalmagneten am Druckregelventil gesteuert. Bei einem Strom nahezu Null ist das Druckregelventil geschlossen und der Volumenstrom von der Konstantpumpe strömt zum Konstantmotor. Es stellt sich eine maximale Drehzahl am Konstantmotor bzw. am Lüfter ein, die abhängig ist von der hydraulischen Übersetzung zwischen Pumpe und Motor und der Drehzahl der Brennkraftmaschine.

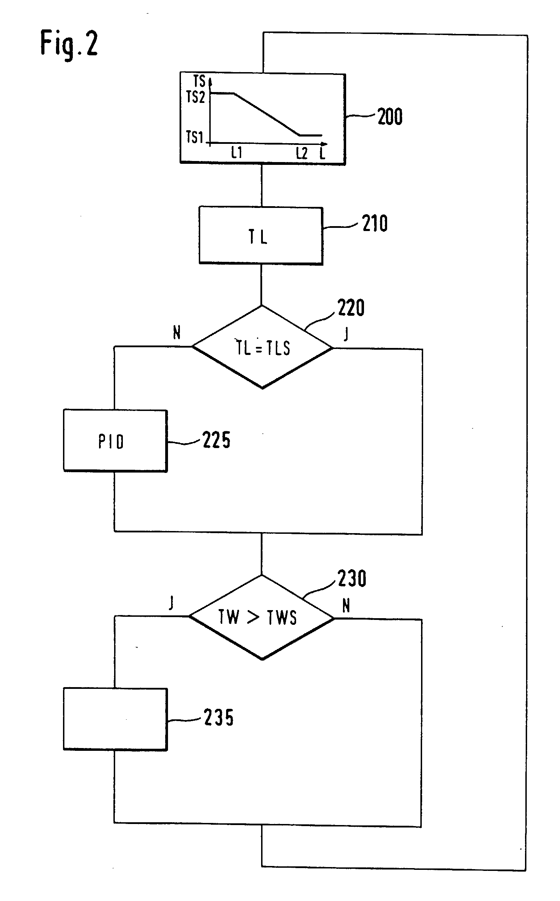

Die Steuerung der Antriebseinheit 195 wird im Zusammenhang mit dem Flußdiagramm der Figur 2 beschrieben. In einem ersten Schritt 200 wird ein Sollwert TLS für die Ladeluft vorgegeben. Diese Vorgabe erfolgt beispielsweise abhängig von der eingespritzten Kraftstoffmenge QK bzw. von anderen entsprechenden Größen wie beispielsweise der Dauer der Kraftstoffzumessung.

Die Vorgabe des Sollwertes TLS für die Ladelufttemperatur erfolgt beispielsweise wie folgt. Bei Vollast der Brennkraftmaschine wird eine Ladelufttemperatur von ca. 40 bis 50°C vorgegeben. Bei Nullast bis ca. 30 % der Vollast wird ein Sollwert für die Ladelufttemperatur von ca. 70 bis 80°C vorgegeben.

Bei einer besonders vorteilhaften Ausgestaltung der Erfindung ist vorgesehen, daß jedem Lastwert ein Wert für die Ladelufttemperatur zugeordnet ist. Die Werte der gewünschten Ladelufttemperatur werden dann vorzugsweise in einem Kennfeld abgelegt. So kann bespielsweise der Sollwert der Ladelufttemperatur als Funktion der Last abgelegt werden. Unterhalb eines unteren Werts L1 für die Last bis ca. 25 bis 30 % der Volllast wird ein erster Wert TS1 für die Ladelufttemperatur von ca 80 Grad Celsius gewählt. Oberhalb eines oberen Werts L2 für die Last ab ca. 50 % der Volllast wird ein zweiter Wert TS2 für die Ladelufttemperatur von ca 40 Grad Celsius gewählt. Zwischen dem unteren und oberen Lastwert fällt die Temperatur von ihrem ersten auf ihren zweiten Wert linear ab. Bei kleinen Lasten bzw. kleinen eingespritzten Kraftstoffmengen wird eine hohe Ladelufttemperatur und bei großen Lasten eine tiefe Ladelufttemperatur eingestellt.

Anschließend wird im Schritt 210 die aktuelle Ladelufttemperatur TL gemessen. Erkennt die Abfrage 220, daß die aktuelle Ladelufttemperatur TL der gewünschten Ladelufttemperatur TLS entspricht, so folgt die Abfrage 230. Weicht die aktuelle Ladelufttemperatur TL von dem Sollwert TLS ab, so bildet im Schritt 225 ein Regler einen Ansteuerwert zur Ansteuerung der Antriebseinheit 195. Der Regler ist vorzugsweise als PID-Regler ausgestaltet.

Anschließend folgt die Abfrage 230. Diese überprüft, ob die Kühlwassertemperatur TW einen vorgegebenen Schwellwert TWS überschreitet. Ist dies der Fall, so wird im Schritt 235 die Antriebseinheit 195 derart angesteuert, daß sie vorzugsweise den maximal möglichen Luftstrom liefert. Insbesondere ist vorgesehen, daß bei Überschreiten des Schwellwerts der Lüfter unabhängig von der aktuellen Ladelufttemperaturn angetrieben wird.

Überschreitet die Kühlwassertemperatur den Schwellwert TWS nicht, so beginnt der Programmdurchlauf von neuem.

Alternativ zur Vorgabe eines Sollwertes, kann auch abhängig von der Last der Brennkraftmaschine eine Lüfterdrehzahl oder ein Stromwert für das Proportionaldruckventil oder eine andere entsprechende Größe vorgegeben werden. In diesem Fall wird die Antriebseinheit 195 abhängig von der Last gesteuert.

Anstelle der kostengünstigen Konstantpumpe kann auch eine Verstellpumpe bzw. eine sauggeregelte Kolbenpumpe als Antriebseinheit 195 eingesetzt werden. Prinzipiell können Antriebseinheiten eingesetzt werden, die gewährleisten, die eine dynamisch schnelle Beeinflussung der Ladelufttemperatur über den Lüfter des Ladeluftkühlers gewährleisten.

Dadurch, daß die Steuerung/Regelung der Ladelufttemperatur durch die Steuereinheit 110 erfolgt, ergibt sich eine erhebliche Kostenreduzierung des Gesamtsystems. Anstelle zweier Steuergeräte, zweier Sensoren zur Erfassung der Ladelufttemperatur bzw. der Kühlwassertemperatur, ist jeweils nur noch ein Steuergerät bzw. ein Sensor erforderlich.

Dadurch, daß die Antriebseinheit und damit die Lüfterleistung in Abhängigkeit des Lastzustandes der Brennkraftmaschine erfolgt, ergeben sich verschiedene Vorteile. Bei Vollast des Verbrennungsmotors kann eine niedere Ladelufttemperatur erreicht werden. Auf Grund der niederen Ladelufttemperatur ist ein früherer Spritzbeginn möglich, der bei gleicher NOX-Emission eine niedereren spezifischen Kraftstoffverbrauch zur Folge hat. Üblicherweise ist vorgesehen, daß der Spritzbeginn abhängig von der aktuellen Ladelufttemperatur TL und weiteren Betriebskenngrößen vorgegeben wird.

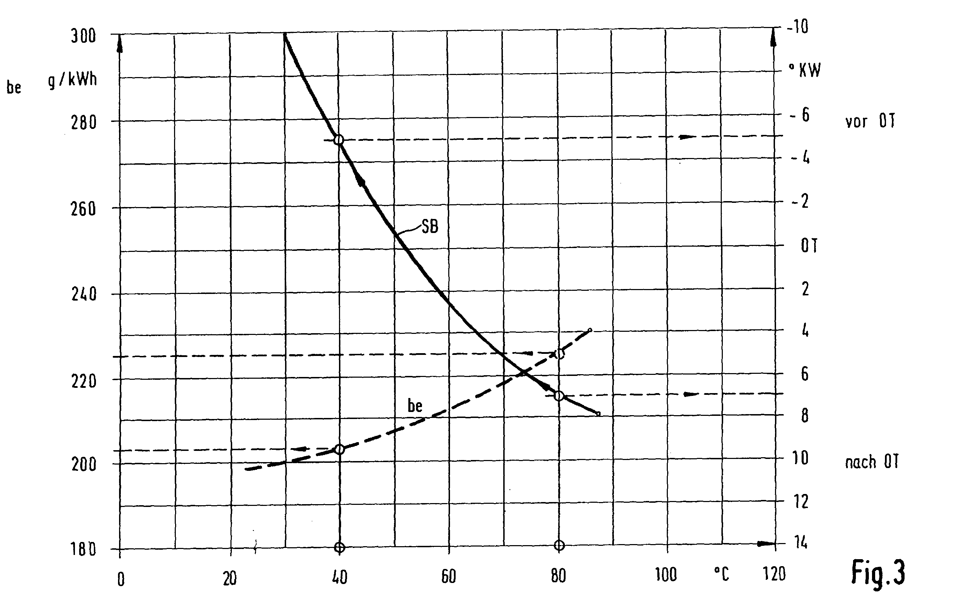

In Figur 3 ist über der Ladelufttemperatur zum einen der spezifische Kraftstoffverbrauch be in Gramm pro Kilowattstunden und zum anderen der Spritzbeginn in Grad Kurbelwellenwinkel (°KW) bezogen auf den oberen Totpunkt (OT) über der Ladelufttemperatur in Grad Celcius (°C) aufgetragen.

Mit einer durchgezogenen Linie ist der mögliche Spritzbeginn abhängig von der Ladelufttemperatur aufgetragen. Dieser Spritzbeginn ist bei konstanter NOX-Emission einstellbar. Bei einem entsprechenden Spritzbeginn bei entsprechender Ladelufttemperatur ergibt sich der mit gestrichelter Linie eingezeichnete spezifische Kraftstoffverbrauch. Wird die Ladelufttemperatur beispielsweise von 80°C auf 40°C abgesenkt, so kann der Spritzbeginn von 7 Grad

Kurbelwellenwinkel nach dem oberen Totpunkt auf 5 Grad Kurbelwellenwinkel vor dem oberen Totpunkt verschoben werden, ohne daß die NOX-Emission ansteigt. Dadurch ergibt sich eine Kraftstoffersparnis von nahezu 10 %.

Bei niederer Last wird eine hohe Ladelufttemperatur von ca. 80°C erreicht. Dadurch ergeben sich niedere Kohlenwasserstoff- und Partikelemissionen.

Bei hoher Brennkraftmaschinendrehzahl N, kleiner Last und kaltem Motor kann die Blau- und Weißrauchemission weitestgehend vermieden werden.

## Patentansprüche

1. Verfahren zur Steuerung einer Brennkraftmaschine, insbesondere einer Dieselbrennkraftmaschine, mit einem Lüfter zur Kühlung wenigstens der Ladeluft, mit einer betriebskenngrößenabhängig steuer- und/oder regelbaren Antriebseinrichtung, die den Lüfter antreibt, dadurch gekennzeichnet, daß abhängig von der Last der Brennkraftmaschine ein Sollwert für die Ladelufttemperatur vorgegeben wird, daß ein Istwert der Ladelufttemperatur gemessen wird und daß ein Regler, der die Ladelufttemperatur auf den Sollwert regelt, ein Ansteuersignal zur Ansteuerung der Antriebseinrichtung bildet und daß ein Spritzbeginn abhängig von der Ladelufttemperatur vorgegeben wird.

2. Verfahren nach Anspruch 1, dadurch gekennzeichnet, daß bei hoher Last ein niederer Sollwert für Ladelufttemperatur vorgebbar ist als bei niedriger Last.

3. Vorrichtung zur Steuerung einer Brennkraftmaschine, insbesondere einer Dieselbrennkraftmaschine, mit einem Lüfter zur Kühlung wenigstens der Ladeluft, mit einer betriebskenngrößenabhängig steuer- und/oder regelbaren Antriebseinrichtung, die den Lüfter antreibt, dadurch gekennzeichnet, daß Mittel vorgesehen sind, die abhängig von der Last der Brennkraftmaschine ein Sollwert für die Ladelufttemperatur vorgeben und einen Istwert der Ladelufttemperatur messen und daß ein Regler, der die Ladelufttemperatur auf den Sollwert regelt, ein Ansteuersignal zur Ansteuerung der Antriebseinrichtung bildet und daß ein Spritzbeginn abhängig von der Ladelufttemperatur vorgegeben wird.

4. Vorrichtung nach Anspruch 4, dadurch gekennzeichnet daß die Antriebseinrichtung von einem Motorsteuergerät und/oder einem Lüftersteuergerät ansteuerbar ist.

5. Vorrichtung nach einem der Ansprüche 3 oder 4, dadurch gekennzeichnet, daß es sich bei der Antriebseinrichtung um einen hydrostatischen Gebläseantrieb handelt.

## Claims

1. Method for controlling an internal combustion engine, in particular a diesel internal combustion engine, having a fan for cooling at least the charge air, having a drive device which can be open-loop and/or closed-loop controlled as a function of an operating characteristic variable and which drives the fan, characterized in that a setpoint value for the charge air temperature is specified as a function of the load of the internal combustion engine, in that an actual value of the charge air temperature is measured, and in that a closed-loop controller which closed-loop controls the charge air temperature to the setpoint value forms an actuation signal for actuating the drive device, and in that a start of injection is specified as a function of the charge air temperature.

2. Method according to Claim 1, characterized in that a lower setpoint value for charge air temperature can be specified in the case of a high load than in the case of a low load.

3. Device for controlling an internal combustion engine, in particular a diesel internal combustion engine, having a fan for cooling at least the charge air, having a drive device which can be open-loop and/or closed-loop controlled as a function of an operating characteristic variable and which drives the fan, characterized in that means are provided which specify a setpoint value for the charge air temperature as a function of the load of the internal combustion engine and measure an actual value of the charge air temperature, and in that a closed-loop controller which closed-loop controls the charge air temperature to the setpoint value forms an actuation signal for actuating the drive device, and in that the start of injection is specified as a function of the charge air temperature.

4. Device according to Claim 4, characterized in that the drive device can be actuated by an engine control unit and/or by a fan control unit.

5. Device according to either of Claims 3 or 4, characterized in that the drive device is a hydrostatic blower drive.

## Revendications

1. Procédé servant à commander un moteur à combustion interne, en particulier un moteur à combustion interne de type Diesel, avec un ventilateur qui sert à refroidir au moins l'air comburant, et avec un système d'entraînement qui peut être commandé ou réglé en fonction de grandeurs caractéristiques de fonctionnement, système qui entraîne le ventilateur,
caractérisé en ce qu'
• on prédéfinit en fonction de la charge du moteur à combustion interne une valeur de consigne pour la température de l'air comburant,
• on mesure une valeur réelle de la température de l'air comburant, et
• un régulateur, qui règle la température de l'air comburant sur la valeur de consigne, forme un signal de commande qui sert à commander le système d'entraînement et
• on prédéfinit un début de l'injection en fonction de la température de l'air comburant.

2. Procédé selon la revendication 1,
caractérisé en ce qu'
on peut prédéfinir en cas de charge élevée une valeur de consigne plus basse pour la température de l'air comburant, que dans le cas d'une charge plus basse.

3. Dispositif servant à commander un moteur à combustion interne, en particulier un moteur à combustion interne de type Diesel, avec un ventilateur qui sert à refroidir au moins l'air comburant, et avec un système d'entraînement qui peut être commandé ou réglé en fonction de grandeurs caractéristiques de fonctionnement, système qui entraîne le ventilateur,
caractérisé en ce qu'
• on prévoit des moyens qui prédéfinissent une valeur de consigne pour la température de l'air comburant indépendamment de la charge du moteur à combustion interne et qui mesurent une valeur réelle de la température de l'air comburant et
• un régulateur, qui règle la température de l'air comburant sur la valeur de consigne, forme un signal de commande qui sert à commander le système d'entraînement et
• on prédéfinit un début de l'injection en fonction de la température de l'air comburant.

4. Dispositif selon la revendication 3,
caractérisé en ce que
le système d'entraînement peut être commandé par un appareil de commande du moteur et/ou par un appareil de commande du ventilateur.

5. Dispositif selon l'une des revendications 3 ou 4,
caractérisé en ce qu'
il s'agit dans le cas du système d'entraînement d'un système d'entraînement hydrostatique de soufflante.
